# EUROPÄISCHE PATENTSCHRIFT

(11) **EP 2 439 419 B1**
(45) Veröffentlichungstag und Bekanntmachung des Hinweises auf die Patenterteilung: **27.05.2015**
(21) Anmeldenummer: 11183900.7
(22) Anmeldetag: 05.10.2011
(51) Int. Cl.: F16C 23/04, F16C 35/02

(54) **Lagergehäuse und Lageranordnung**
Bearing housing and bearing assembly
Logement et ensemble de palier

(30) Priorität: 06.10.2010 DE 102010042074
(43) Veröffentlichungstag der Anmeldung: 11.04.2012
(73) Patentinhaber: Aktiebolaget SKF, 41 550 Göteborg (SE)
(72) Erfinder: Schmehr, Peter, 66129 Saarbrücken (DE)
(74) Vertreter: Schonecke, Mitja

(56) Entgegenhaltungen:
- DE-T2- 3 855 008
- DE-T2- 60 031 360
- DE-T2- 69 535 715
- US-A- 2 827 340

## Beschreibung

Die Erfindung betrifft eine Lageranordnung zur Lagerung eines rotierenden Bauteils, umfassend ein Lagergehäuse und das rotierende Bauteil.

Für die verschiedensten Anwendungen werden gattungsgemäße Lagergehäuse benötigt, die ein sich drehendes Teil mittels eines Gleitlagers lagern. Bekannt ist es dabei, ein Gleitlager (bestehend aus zwei Gleitlager-Teilen, die relativ zueinander gleiten können) in ein Gehäuse einzubauen. Das Gehäuse besteht häufig aus Grauguss.

Eine solche Lageranordnung offenbart beispielsweise die DE 1 575 550 B. Weitere, teilweise sehr ähnliche Lösungen offenbaren die DE 38 55 008 T2, die JP 2001 165 142 A, die DE 1 936 766 U, die JP 07 042 729 A, die DE 83 18 992 U, die US 5 346 315 A, die US 2 827 340 A, die GB 553 067 A, die US 3 989 322 A, die US 3 989 321 A und die FR 2 168 654 A5.

In manchen Fällen werden gattungsgemäße Lageranordnungen benötigt, die den Umgebungsbedingungen ausgesetzt sind, allerdings nur geringe Lagerbewegungen ausführen müssen.

Als Beispiel sei die Lagerung eines Sonnenkollektors genannt, die dem Sonnenstand entsprechend den Kollektor nachführen muss, d. h. die Lageranordnung führt nur kleine Schwenkbewegungen aus. Indes sind solche Anlagen typischer Weise ungeschützt in der Umgebung angeordnet, so dass die Lageranordnung unempfindlich gegen Regen etc. sein muss.

Insbesondere bei der genannten Anwendung kommt auch der kostengünstigen Fertigung der Lageranordnung eine hohe Bedeutung zu, da in großen Solaranlagen eine große Anzahl entsprechender Lager benötigt wird.

Der Erfindung liegt die **Aufgabe** zu Grunde, ein Lagergehäuse und eine Lageranordnung der eingangs genannten Art vorzuschlagen, das bzw. die den genannten Forderungen optimal entspricht. Demgemäß soll das Lagergehäuse bzw. die Lageranordnung kostengünstig herstellbar sein und sich besonders für langsame Stellbewegungen eignen. Weiterhin soll es resistent gegen Umwelteinflüsse sein.

Die **Lösung** dieser Aufgabe durch die Erfindung ist dadurch gekennzeichnet, dass in dem Lagergehäuse ein Teil eines Gleitlagers angeordnet ist, wobei am rotierenden Bauteil ein Teil des Gleitlagers angeordnet ist, wobei der im Lagergehäuse angeordnete Teil des Gleitlagers mit dem Lagergehäuse einstückig ausgebildet ist, wobei das Teil des Gleitlagers eine im Radialschnitt sphärisch ausgebildete Gleitfläche aufweist, wobei das am rotierenden Bauteil angeordnete Teil des Gleitlagers in Achsrichtung des rotierenden Bauteils mittels eines Gleit-Schiebesitzes verschieblich angeordnet ist, wobei in den beiden axial endseitigen Endbereichen des rotierenden Bauteils Befestigungsflansche angeordnet sind, wobei der Außendurchmesser der Befestigungsflansche so gewählt ist, dass bei einer axialen Verschiebung des rotierenden Bauteils relativ zum Lagergehäuse der Befestigungsflansch an einer Stirnseite des Lagergehäuses anschlagen kann.

Dabei ist bevorzugt vorgesehen, dass das Lagergehäuse geteilt, insbesondere zweigeteilt, ausgebildet ist und jeder Teil des Lagergehäuses einstückig mit einem korrespondierenden Teil des Teils des Gleitlagers ausgebildet ist.

Das Lagergehäuse samt Teil des Gleitlagers besteht dabei besonders bevorzugt aus Kunststoff. In diesem Falle ist das Teil des Gleitlagers bevorzugt an das Lagergehäuse bei dessen Herstellung im Spritzgießverfahren angespritzt.

Die Gleitfläche des im Lagergehäuse angeordneten Teils des Gleitlagers weist im Radialschnitt bevorzugt eine konkave Form auf.

Das am rotierenden Bauteil angeordnete Teil des Gleitlagers ist bevorzugt weiterhin mehrteilig, insbesondere zweiteilig, ausgebildet.

Das am rotierenden Bauteil angeordnete Teil des Gleitlagers weist schließlich im Radialschnitt vorzugsweise eine konvexe Gleitfläche auf.

Das am rotierenden Bauteil angeordnete Teil des Gleitlagers besteht dabei bevorzugt aus Kunststoff oder aus Metall (z. B. Gleitlagerbronze).

Das vorgeschlagene Lagergehäuse bzw. die vorgeschlagene Lageranordnung kommt gemäß einem sehr bevorzugten Anwendungsfall bei der Lagerung von Sonnenkollektor-Elementen zum Einsatz, die dem Lauf der Sonne folgen sollen. Demgemäß sind hier nur relativ geringe und langsame Schwenkbewegungen der Lageranordnung relevant.

In der Zeichnung sind Ausführungsbeispiele der Erfindung dargestellt. Es zeigen:
- Fig. 1: die Vorderansicht eines erfindungsgemäßen Lagergehäuses,
- Fig. 2: das Lagergehäuse gemäß Fig. 1 in perspektivischer Darstellung,
- Fig. 3: den Radialschnitt durch das Lagergehäuse gemäß einer Ausführungsform, die nicht erfindungsgemäß ist, wobei ein rotatorisch zu lagerndes Bauteil mit dargestellt ist, und
- Fig. 4: in der Darstellung gemäß Fig. 3 eine erfindungsgemäße Ausführungsform des Lagergehäuses samt zu lagerndem Bauteil.

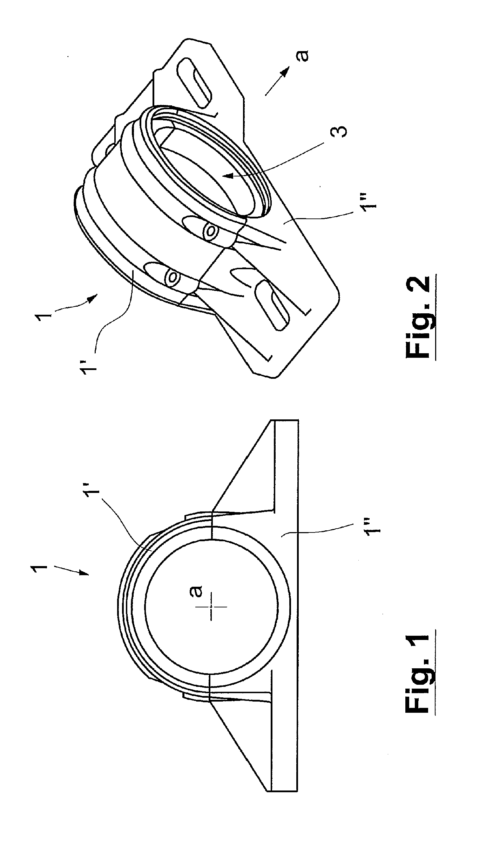

In Fig. 1 und Fig. 2 ist ein Lagergehäuse 1 skizziert, das zur Lagerung eines in diesen Figuren nicht dargestellten Bauteils dient. Das Lagergehäuse 1 ist geteilt ausgeführt, d. h. es besteht aus einem oberen Teil 1' und einem unteren Teil 1".

Damit ist es in einfacher Weise möglich, dass zu lagernde Bauteil in bekannter Weise zu montieren. Die beiden Gehäuseteile 1' und 1" können in bekannter Weise miteinander verschraubt werden.

Im Inneren des Lagergehäuses 1 ist ein Gleitlager angeordnet, d. h. genauer gesagt eines der Teile 3 des Gleitlagers, das während des bestimmungsgemäßen Gebrauchs mit einem hier nicht dargestellten zweiten Teil des Gleitlagers in Gleitverbindung steht.

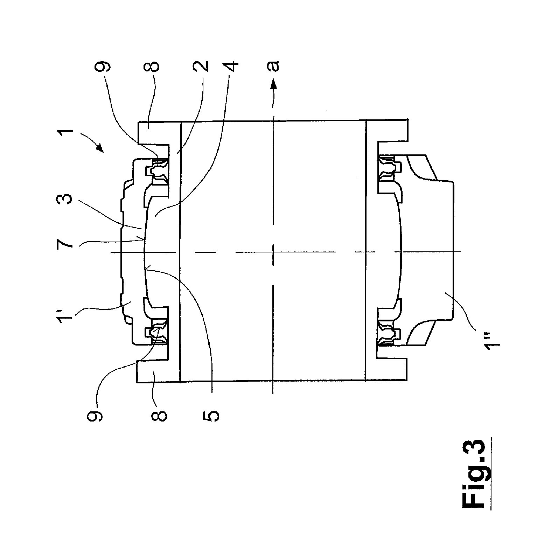

In Fig. 3 ist eine erste spezielle Ausführungsform der gesamten Lageranordnung zu sehen. Das zweiteilige Lagergehäuse 1 weist das Teil 3 des Gleitlagers auf, wobei vorgesehen ist, dass die hier konvex ausgeführte Lagerschale (Teil 3 des Gleitlagers) mit dem Gehäuse 1 bzw. seinen Teilen 1' und 1" einstückig ausgeführt ist. Demgemäß wurde beim Spritzgießen des hier aus Kunststoff bestehenden Lagergehäuses 1 bzw. seiner Teile 1', 1" das Teil 3 des Gleitlagers mit seiner konkaven (sphärischen) Form angespritzt.

Das Teil 3 des Gleitlagers bildet somit die konkave Gleitfläche 5. Diese ist vorgesehen, um mit einem zweiten Teil 4 des Gleitlagers zusammenzuwirken. Dieses zweite Teil 4 ist im Ausführungsbeispiel nach Fig. 1 einstückig am Bauteil 2 angeformt, das rotatorisch mittels des Gleitlagers 3, 4 zu lagern ist. Das Bauteil 2 in Form einer Welle kann in seinen axialen Endbereichen Befestigungsflansche 8 zum Befestigen (Anschrauben) von Anbaubauteilen aufweisen.

Das Teil 4 des Gleitlagers 3, 4 weist eine zur konkaven Gleitfläche 5 korrespondierende kongruente Gleitfläche 7 auf, die im Ausführungsbeispiel dementsprechend konvex ist.

Da das Teil 4 des Gleitlagers 3, 4 axial fest an der Welle 2 angeordnet ist, bildet die so gebildete Lagerstelle ein Festlager.

Die Gleitlagerstelle ist mit zwei Dichtungen 9 abgedichtet, die in den axialen Endbereichen des Lagergehäuses 1 positioniert sind. Für die Dichtungen 9 können im Lagergehäuse 1 entsprechende Aufnahmeräume vorgesehen sein.

Wird die Welle 2 während des Betriebs um die Achse verschwenkt, die senkrecht auf der Zeichenebene in Fig. 3 steht, hat dies aufgrund der Ausgestaltung der Gleitflächen 5, 7 nicht zur Folge, dass Kantentragen zwischen den Teilen 3, 4 des Gleitlagers entsteht. Vielmehr können derartige Verschwenkungen durch die Konkavität / Konvexität der Gleitflächen 5, 7 ausgeglichen werden.

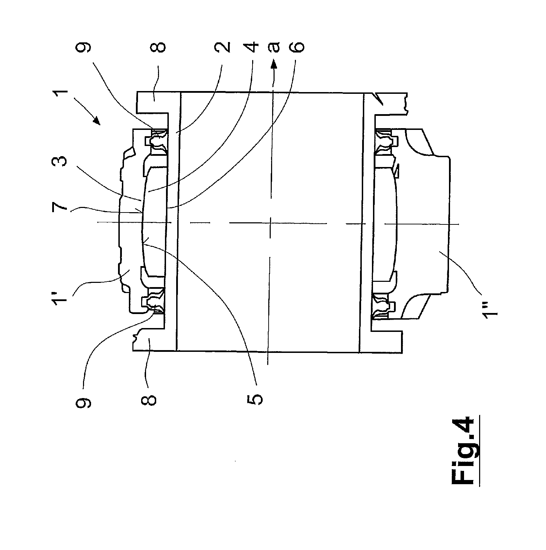

In Fig. 4 ist eine erfindungsgemäße Ausführungsform dargestellt, die sehr ähnlich zu derjenigen gemäß Fig. 3 ist. Hier allerdings ist das Teil 4 des Gleitlagers relativ zur Welle 2 in Achsrichtung a verschieblich angeordnet. Die axiale Verschieblichkeit wird durch einen Gleit-Schiebesitz 6 erreicht, mit dem das Teil 4 auf der Welle 2 sitzt. Somit wird eine Loslagerfunktion geschaffen.

Aus montagetechnischen Gründen ist das Teil 4 des Gleitlagers hier zweiteilig ausgebildet, d. h. es kommen zwei Halbschalen zum Einsatz, die die Welle 2 jeweils um 180° umfassen.

Diese Lösung kommt besonders dort zum Einsatz, wo eine Anzahl der dargestellten Lageranordnungen gemäß Fig. 4 in Reihe geschaltet werden.

Sind solche Anordnungen der Sonnenstrahlung ausgesetzt, wie es dem typischen Anwendungsfall bei Solarkollektor-Lagerungen entspricht, kann es zu Längendehnungen der Wellen 2 kommen, die dann problemlos für das Gleitlager bleiben, weil ein axialer Ausgleich aufgrund des Gleit-Schiebesitzes erfolgen kann.

Zur Begrenzung der axialen Verschieblichkeit kann bei der Lösung gemäß Fig. 3 auch vorgesehen werden, dass Anlaufscheiben - mit Sicherungsring axial fixiertim Lagergehäuse oder auf der Welle angeordnet werden, um hierdurch einen axialen Anschlag für die Bauteile bei axialer Relativverschiebung zu haben.

Die Lageranordnungen können damit somit sowohl als Festlager (gemäß Fig. 3) oder als Loslager (gemäß Fig. 4) fungieren.

Die Merkmale der Ausführungsbeispiele können auch in Kombination eingesetzt werden.

### Bezugszeichenliste

- 1: Lagergehäuse
- 1': Teil des Lagergehäuses
- 1": Teil des Lagergehäuses
- 2: Bauteil (Welle)
- 3, 4: Gleitlager
- 3: Teil eines Gleitlagers
- 4: Teil eines Gleitlagers
- 5: Gleitfläche
- 6: Gleit-Schiebesitz
- 7: Gleitfläche
- 8: Befestigungsflansch
- 9: Dichtung

- a: Achsrichtung

## Patentansprüche

1. Lageranordnung zur Lagerung eines rotierenden Bauteils (2), umfassend ein Lagergehäuse (1) und das rotierende Bauteil (2),
wobei in dem Lagergehäuse (1) ein Teil (3) eines Gleitlagers (3, 4) angeordnet ist und wobei am rotierenden Bauteil (2) ein Teil (4) des Gleitlagers (3, 4) angeordnet ist,
wobei der im Lagergehäuse (1) angeordnete Teil (3) des Gleitlagers (3, 4) mit dem Lagergehäuse (1) einstückig ausgebildet ist, wobei das Teil (3) des Gleitlagers (3, 4) eine im Radialschnitt sphärisch ausgebildete Gleitfläche (5) aufweist,
**dadurch gekennzeichnet, dass**
das am rotierenden Bauteil (2) angeordnete Teil (4) des Gleitlagers (3, 4) in Achsrichtung (a) des rotierenden Bauteils (2) mittels eines Gleit-Schiebesitzes (6) verschieblich angeordnet ist,
wobei in den beiden axial endseitigen Endbereichen des rotierenden Bauteils (2) Befestigungsflansche (8) angeordnet sind,
wobei der Außendurchmesser der Befestigungsflansche (8) so gewählt ist, dass bei einer axialen Verschiebung des rotierenden Bauteils (2) relativ zum Lagergehäuse (1) der Befestigungsflansch (8) an einer Stirnseite des Lagergehäuses (1) anschlagen kann.

2. Lageranordnung nach Anspruch 1, **dadurch gekennzeichnet, dass** das Lagergehäuse (1) geteilt, insbesondere zweigeteilt, ausgebildet ist und jeder Teil (1', 1") des Lagergehäuses (1) einstückig mit einem korrespondierenden Teil des Gleitlagers (3, 4) ausgebildet ist.

3. Lageranordnung nach Anspruch 1 oder 2, **dadurch gekennzeichnet, dass** das Lagergehäuse (1) samt Teil (3) des Gleitlagers (3, 4) aus Kunststoff besteht.

4. Lageranordnung nach Anspruch 3, **dadurch gekennzeichnet, dass** das Teil (3) des Gleitlagers (3, 4) an das Lagergehäuse (1) angespritzt ist.

5. Lageranordnung nach einem der Ansprüche 1 bis 4, **dadurch gekennzeichnet, dass** die Gleitfläche (5) des im Lagergehäuse (1) angeordneten Teils (3) des Gleitlagers (3, 4) im Radialschnitt eine konkave Form aufweist.

6. Lageranordnung nach einem der Ansprüche 1 bis 5, **dadurch gekennzeichnet, dass** das am rotierenden Bauteil (2) angeordnete Teil (4) des Gleitlagers (3, 4) mehrteilig, insbesondere zweiteilig, ausgebildet ist.

7. Lageranordnung nach einem der Ansprüche 1 bis 6, **dadurch gekennzeichnet, dass** das am rotierenden Bauteil (2) angeordnete Teil (4) des Gleitlagers (3, 4) im Radialschnitt eine konvexe Gleitfläche (7) aufweist.

8. Lageranordnung nach einem der Ansprüche 1 bis 7, **dadurch gekennzeichnet, dass** das am rotierenden Bauteil (2) angeordnete Teil (4) des Gleitlagers (3, 4) aus Kunststoff oder aus Metall besteht.

## Claims

1. Bearing assembly for mounting a rotating component (2), comprising a bearing housing (1) and the rotating component (2),
a part (3) of a plain bearing (3, 4) being arranged in the bearing housing (1) and a part (4) of the plain bearing (3, 4) being arranged on the rotating component (2),
that part (3) of the plain bearing (3, 4) which is arranged in the bearing housing (1) being formed in one piece with the bearing housing (1), the part (3) of the plain bearing (3, 4) having a sliding surface (5) formed spherically in radial section,
**characterized in that**
that part (4) of the plain bearing (3, 4) which is arranged on the rotating component (2) is arranged displaceably in the axial direction (a) of the rotating component (2) by means of a slide-and-push fit (6),
fastening flanges (8) being arranged in the two axially end-face end regions of the rotating component (2),
the outside diameter of the fastening flanges (8) being selected such that, in the event of axial displacement of the rotating component (2) in relation to the bearing housing (1), the fastening flange (8) can butt against an end face of the bearing housing (1).

2. Bearing assembly according to Claim 1, **characterized in that** the bearing housing (1) is formed so as to be divided, in particular divided in two, and each part (1', 1") of the bearing housing (1) is formed in one piece with a matching part of the plain bearing (3, 4).

3. Bearing assembly according to Claim 1 or 2, **characterized in that** the bearing housing (1), together with the part (3) of the plain bearing (3, 4), consists of plastic.

4. Bearing assembly according to Claim 3, **characterized in that** the part (3) of the plain bearing (3, 4) is injection-moulded onto the bearing housing (1).

5. Bearing assembly according to one of Claims 1 to 4, **characterized in that** the sliding surface (5) of that part (3) of the plain bearing (3, 4) which is arranged in the bearing housing (1) has a concave shape in radial section.

6. Bearing assembly according to one of Claims 1 to 5, **characterized in that** that part (4) of the plain bearing (3, 4) which is arranged on the rotating component (2) is of multi-part, in particular two-part, form.

7. Bearing assembly according to one of Claims 1 to 6, **characterized in that** that part (4) of the plain bearing (3, 4) which is arranged on the rotating component (2) has a convex sliding surface (7) in radial section.

8. Bearing assembly according to one of Claims 1 to 7, **characterized in that** that part (4) of the plain bearing (3, 4) which is arranged on the rotating component (2) consists of plastic or of metal.

## Revendications

1. Agencement de palier pour le support sur palier d'un composant rotatif (2) comprenant un logement de palier (1) et le composant rotatif (2),
une partie (3) d'un palier lisse (3, 4) étant disposée dans le logement de palier (1) et une partie (4) du palier lisse (3, 4) étant disposée au niveau du composant rotatif (2),
la partie (3) du palier lisse (3, 4) disposée dans le logement de palier (1) étant réalisée d'une seule pièce avec le logement de palier (1), la partie (3) du palier lisse (3, 4) présentant une surface de glissement (5) réalisée sous forme sphérique en coupe radiale,
**caractérisé en ce que**
la partie (4) du palier lisse (3, 4) disposée au niveau du composant rotatif (2) est disposée de manière déplaçable dans la direction axiale (a) du composant rotatif (2) au moyen d'un siège de glissement coulissant (6),
des brides de fixation (8) étant disposées dans les deux régions d'extrémité axialement du côté des extrémités du composant rotatif (2),
le diamètre extérieur des brides de fixation (8) étant choisi de telle sorte que dans le cas d'un déplacement axial du composant rotatif (2) par rapport au logement de palier (1), la bride de fixation (8) puisse buter contre un côté frontal du logement de palier (1).

2. Agencement de palier selon la revendication 1, **caractérisé en ce que** le logement de palier (1) est réalisé sous forme divisée, en particulier divisée en deux et chaque partie (1', 1'') du logement de palier (1) est réalisée d'une seule pièce avec une partie correspondante du palier lisse (3, 4).

3. Agencement de palier selon la revendication 1 ou 2, **caractérisé en ce que** le logement de palier (1) ainsi que la partie (3) du palier lisse (3, 4) se composent de plastique.

4. Agencement de palier selon la revendication 3, **caractérisé en ce que** la partie (3) du palier lisse (3, 4) est surmoulée sur le logement de palier (1).

5. Agencement de palier selon l'une quelconque des revendications 1 à 4, **caractérisé en ce que** la surface de glissement (5) de la partie (3) du palier lisse (3, 4) disposée dans le logement de palier (1) présente une forme concave en coupe radiale.

6. Agencement de palier selon l'une quelconque des revendications 1 à 5, **caractérisé en ce que** la partie (4) du palier lisse (3, 4) disposée au niveau du composant rotatif (2) est réalisée en plusieurs parties, en particulier en deux parties.

7. Agencement de palier selon l'une quelconque des revendications 1 à 6, **caractérisé en ce que** la partie (4) du palier lisse (3, 4) disposée au niveau du composant rotatif (2) présente une surface de glissement convexe (7) en coupe radiale.

8. Agencement de palier selon l'une quelconque des revendications 1 à 7, **caractérisé en ce que** la partie (4) du palier lisse (3, 4) disposée au niveau du composant rotatif (2) se compose de plastique ou de métal.
